# DEMANDE DE BREVET EUROPEEN

(11) **EP 2 608 129 A1**
(43) Date de publication de la demande: **26.06.2013**
(21) Numéro de dépôt: 12198560.0
(22) Date de dépôt: 20.12.2012
(51) Int. Cl.: G06Q 10/06

(54) **Systèmes et procédés d'identification d'experts et plate-forme d'intermédiation**

(30) Priorité: 22.12.2011 FR 1162256
(71) Demandeur: Idexlab, 75011 Paris (FR)
(72) Inventeur: Lievin, Jean-Louis, 75011 Paris (FR)
(74) Mandataire: Bonnans, Arnaud

(57) **Abrégé**

Un procédé d'identification d'au moins un expert compétent pour résoudre un problème technique défini par une requête de base, comprend les étapes suivantes :
- détermination d'une pluralité de concepts associés à la requête de base par analyse automatique de texte conduite au sein d'un ensemble de documents électroniques;
- pour chaque concept de la pluralité, commande de l'affichage d'une désignation du concept concerné avec possibilité pour un utilisateur de sélectionner de manière interactive une information liée au concept concerné;
- identification d'au moins un expert associé à des documents électroniques répondant, au sens d'une mesure obtenue par analyse automatique de texte, à la requête de base complétée par un concept associé à l'information sélectionnée.

## Description

L'invention concerne des systèmes et procédés d'identification d'experts, ainsi qu'une plate-forme d'intermédiation destinée à l'innovation ouverte.

Dans le contexte de l'innovation ouverte, une entreprise cherche typiquement un ou plusieurs expert(s) compétent(s) pour résoudre un problème technique qui se pose à cette entreprise.

Cette recherche d'experts est classiquement réalisée manuellement, typiquement par interrogation de bases de données à l'aide d'un moteur de recherche, puis par tri manuel des informations collectées afin d'identifier des experts compétents sur un sujet donné.

Il a également été proposé d'assister les personnes effectuant cette démarche au moyen d'un système informatique, comme décrit par exemple dans la demande de brevet WO 02/33591.

Si de tels systèmes permettent l'automatisation de certaines tâches, le processus de recherche reste complexe dans son ensemble et les solutions proposées ne sont donc utilisables que par des personnes spécialisées dans la recherche documentaire dans le domaine technique concerné.

Dans ce contexte, l'invention propose un procédé d'identification d'au moins un expert compétent pour résoudre un problème technique défini par une requête de base, caractérisé en ce qu'il comprend les étapes suivantes :
- détermination d'une pluralité de concepts associés à la requête de base par analyse automatique de texte conduite au sein d'un ensemble de documents électroniques ;
- pour chaque concept de la pluralité, commande de l'affichage d'une désignation du concept concerné avec possibilité pour un utilisateur de sélectionner de manière interactive une information liée au concept concerné ;
- identification d'au moins un expert associé à des documents électroniques répondant, au sens d'une mesure obtenue par analyse automatique de texte, à la requête de base complétée par au moins un concept associé à l'information sélectionnée.

On suggère ainsi à l'utilisateur des concepts liés à sa recherche, définie par la requête de base ; l'utilisateur peut alors sélectionner une information liée à l'un au moins des concepts, telle que le concept lui-même ou par exemple un document pertinent pour le concept concerné, s'il juge cette information appropriée, et avoir de ce fait accès à d'autres experts compétents.

Selon un premier mode de réalisation envisageable, l'information liée au concept concerné est le concept concerné et le concept associé à l'information sélectionnée est l'information sélectionnée.

Selon un second mode de réalisation envisageable, l'information liée au concept concerné peut être un document pertinent pour le concept concerné et le concept associé à l'information sélectionnée peut alors être un concept présent dans le document sélectionné.

Le procédé peut dans ce cas par exemple comprendre les étapes suivantes :
- sélection interactive d'un concept de la pluralité ;
- détermination de documents liés au concept sélectionné par analyse automatique de texte conduite au sein d'une partie au moins de l'ensemble de documents électroniques, ledit document pertinent étant l'un desdits documents liés au concept sélectionné.

L'utilisateur peut ainsi sélectionner un concept, cette action entrainant par exemple un filtrage et un ré-ordonnancement des documents électroniques présentés selon leur ordre de pertinence relative au concept sélectionné. L'utilisateur peut ensuite consulter un résumé des documents et sélectionner ceux qu'il juge pertinents pour sa recherche. Le procédé d'identification d'experts consiste alors à classer les experts jugés les plus compétents relativement à la requête de base complétée des concepts suggérés étant présents dans lesdits documents sélectionnés.

Ce procédé d'identification est typiquement mise en oeuvre par un système informatique, éventuellement en coopération avec un terminal distant (terminal de l'utilisateur). Le système informatique peut alors commander l'affichage sur un écran du système informatique ou sur un écran du terminal utilisateur ; selon le cas, la sélection interactive peut alors être réalisée grâce à un moyen de saisie du système informatique ou du terminal utilisateur. Par ailleurs, les documents électroniques sont par exemple mémorisés dans une base de données locale ou distante.

On prévoit par exemple une étape de détermination d'un niveau d'expertise associé à l'expert identifié au moyen d'une mesure de similarité entre les termes de la requête complétée et des termes extraits des documents associés à l'expert concerné. Le niveau d'expertise déterminé permet d'ordonner les experts par ordre de niveau d'expertise et ainsi être utilisé dans l'étape d'identification.

Par ailleurs, lorsqu'une pluralité d'experts est identifiée à l'étape d'identification avec, pour chaque expert identifié, un niveau d'expertise associé, on peut prévoir une étape d'affichage d'une indication déterminée en fonction des niveaux d'expertises des experts identifiés.

Cette indication est par exemple représentative du nombre d'experts ayant un niveau d'expertise supérieur à un seuil déterminé, ce qui permet de visualiser facilement le nombre d'experts identifiés comme ayant un niveau d'expertise considéré adapté à la résolution du problème technique.

La requête de base est par exemple définie par au moins un mot-clé saisi par l'utilisateur ; en variante, la requête de base peut être extraite d'un descriptif du problème technique.

On peut prévoir par ailleurs que la détermination de la pluralité de concepts par analyse automatique de texte utilise une méthode basée sur des statistiques d'associations entre la requête de base et des séquences de mots des documents électroniques.

On peut également prévoir la réitération des étapes de détermination d'une pluralité de concepts et d'affichage d'une désignation des concepts déterminés sur la base de la requête complétée. L'utilisateur a ainsi accès à de nouveaux concepts qu'il peut choisir de sélectionner (et éventuellement de refuser).

L'ensemble de documents électroniques est par exemple déterminé par recherche au sein d'au moins une base de données documentaire sur la base d'au moins un mot-clé de la requête de base.

De manière indépendante, on propose un procédé d'identification d'experts, caractérisé en ce qu'il comprend les étapes suivantes :
- détermination, pour chaque expert parmi une pluralité d'experts, d'un niveau d'expertise par analyse automatique de texte au sein d'un corpus de documents électroniques comprenant des documents associés à l'expert ;
- détermination, pour chaque expert de ladite pluralité, d'un niveau de confiance au moyen d'une mesure des liens existant entre des informations électroniques associées à l'expert et d'autres informations électroniques ;
- sélection de certains experts parmi ladite pluralité sur la base des niveaux d'expertise déterminés et des niveaux de confiance déterminés.

L'identification des experts ne se fait pas ainsi sur la seule base des documents auxquels il est lié, mais également sur la base d'autres informations qui permettent d'évaluer un niveau de confiance.

On remarque que les caractéristiques de ce procédé d'identification peuvent éventuellement être combinées à celles du procédé d'identification d'au moins un expert présenté plus haut, comme cela sera d'ailleurs le cas dans l'exemple décrit ci-après.

Le niveau de confiance d'un expert est par exemple déterminé en fonction d'une mesure du nombre de citations de documents électroniques associés à l'expert dans d'autres documents électroniques et/ou en fonction d'une mesure de sa connectivité au sein d'un graphe.

Un tel graphe comprend par exemple des noeuds correspondant à des personnes auxquelles l'expert est lié selon lesdites informations électroniques. Ce liens peuvent par exemple être des relations de type : co-auteur de l'expert, citant l'expert dans un document, étant cité par l'expert, étant connecté avec l'expert dans un réseau social, La mesure de connectivité peut quant à elle être pondérée en fonction de la pertinence, au regard d'une requête donnée, des informations électroniques associées à chaque noeud.

L'invention propose également un système d'identification d'au moins un expert compétent pour résoudre un problème technique défini par une requête de base, caractérisé en ce qu'il comprend un écran, un moyen de saisie, des moyens de détermination d'une pluralité de concepts associés à la requête de base par analyse automatique de texte conduite au sein d'un ensemble de documents électroniques mémorisés dans au moins une base de données ; des moyens pour commander, pour chaque concept de la pluralité, l'affichage d'une désignation du concept concerné avec possibilité pour un utilisateur de sélectionner de manière interactive, grâce au moyen de saisie, une information liée au concept concerné; et des moyens d'identification d'au moins un expert associé à des documents électroniques répondant, au sens d'une mesure obtenue par analyse automatique de texte, à la requête de base complétée par au moins un concept associé à l'information sélectionnée.

Est aussi envisagé un système d'identification d'experts, caractérisé en ce qu'il comprend des moyens de détermination, pour chaque expert parmi une pluralité d'experts, d'un niveau d'expertise par analyse automatique de texte au sein d'un corpus de documents électroniques comprenant des documents associés à l'expert ; des moyens de détermination, pour chaque expert de ladite pluralité, d'un niveau de confiance au moyen d'une mesure des liens existant entre des informations électroniques associées à l'expert et d'autres informations électroniques ; et des moyens de sélection de certains experts parmi ladite pluralité sur la base des niveaux d'expertise déterminés et des niveaux de confiance déterminés.

Ces systèmes peuvent comprendre des caractéristiques correspondantes aux caractéristiques optionnelles présentées ci-dessus en termes de procédé.

On propose également une plate-forme d'intermédiation destinée à l'innovation ouverte, caractérisée en ce qu'elle comprend :
- des moyens de réception d'une définition d'un problème technique ;
- des moyens d'identification d'au moins un expert compétent pour résoudre ce problème technique selon un procédé comme évoqué ci-dessus ;
- des moyens d'émission d'un message électronique audit au moins un expert identifié.

D'autres caractéristiques et avantages de l'invention apparaîtront à la lumière de la description qui suit, faite en référence aux dessins annexés dans lesquels :
- la figure 1 représente les étapes principales du fonctionnement d'un système de recherche d'experts conforme aux enseignements de l'invention ;
- les figures 2 et 3 représentent les éléments affichés par l'écran du système informatique au cours de différentes étapes du processus représentées à la figure 1 ;
- la figure 4 représente les éléments affichés par l'écran selon une variante de réalisation de l'invention.

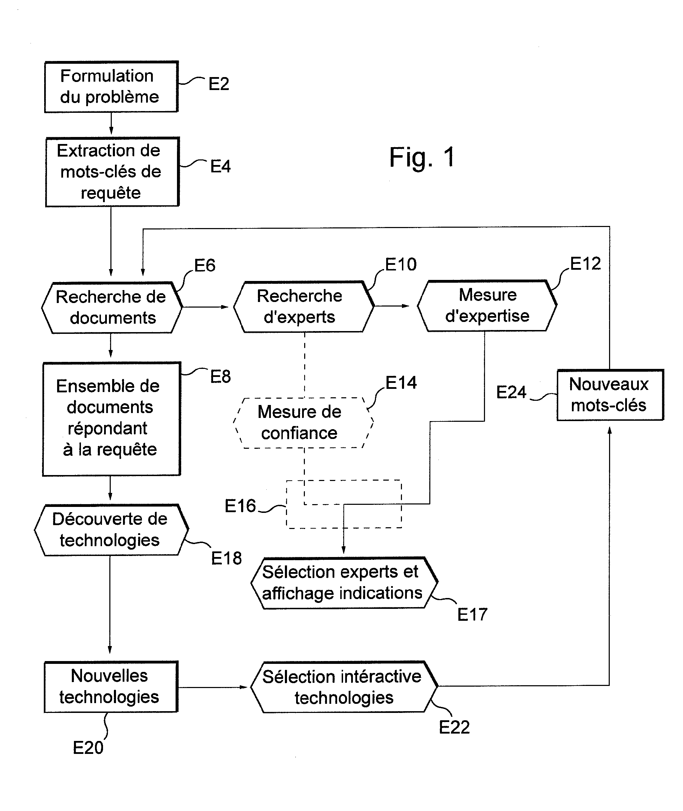

La **figure 1** représente les étapes principales d'un procédé de recherche d'experts mises en oeuvre au moyen d'un système informatique.

Ce système informatique comprend par exemple une unité centrale (qui inclut elle-même un microprocesseur), un clavier (et/ou autre moyen de saisie d'information par l'utilisateur, telle qu'une souris) et un écran qui affiche des informations sous la commande du microprocesseur.

L'unité centrale comprend en outre des moyens de mémorisation (tels qu'une mémoire vive et un disque dur) qui mémorisent des instructions d'un programme informatique dont l'exécution par le microprocesseur permet la mise en oeuvre des procédés décrits ci-après.

Les moyens de mémorisation stockent également des paramètres utilisés par ce programme lors de la mise en oeuvre des procédés susmentionnés.

L'unité centrale comprend en outre un module de communication permettant au microprocesseur d'échanger des données avec des ordinateurs distants (par exemple via le réseau Internet) et d'accéder ainsi à des bases de données documentaires comme expliqué dans la suite.

Les bases de données documentaires (distantes ou locales) comprennent des documents électroniques, en général désigné chacun par un identifiant, et comprenant chacun plusieurs champs de données, notamment des données désignant l'auteur ou les auteurs du document concerné et des données de contenu représentant les mots constituant le document concerné.

Le microprocesseur peut donc ainsi accéder aux documents électroniques, parcourir les données de ces documents électroniques et effectuer des calculs (par exemple statistiques) sur la base de ces données, tels que la fréquence relative d'un mot dans un document particulier.

Dans la suite, on décrit un mode de réalisation dans lequel l'interaction avec l'utilisateur se fait au moyen du clavier (ou autre moyen de saisie) et de l'écran du système informatique. On peut toutefois envisager en variante que l'interaction avec l'utilisateur ait lieu au niveau d'un terminal distant au moyen d'un écran et de moyens de saisie de ce terminal distant. Les procédés décrits ci-après sont dans ce cas mis en oeuvre par collaboration entre le terminal distant et le système informatique, ici aussi par exemple via le réseau Internet.

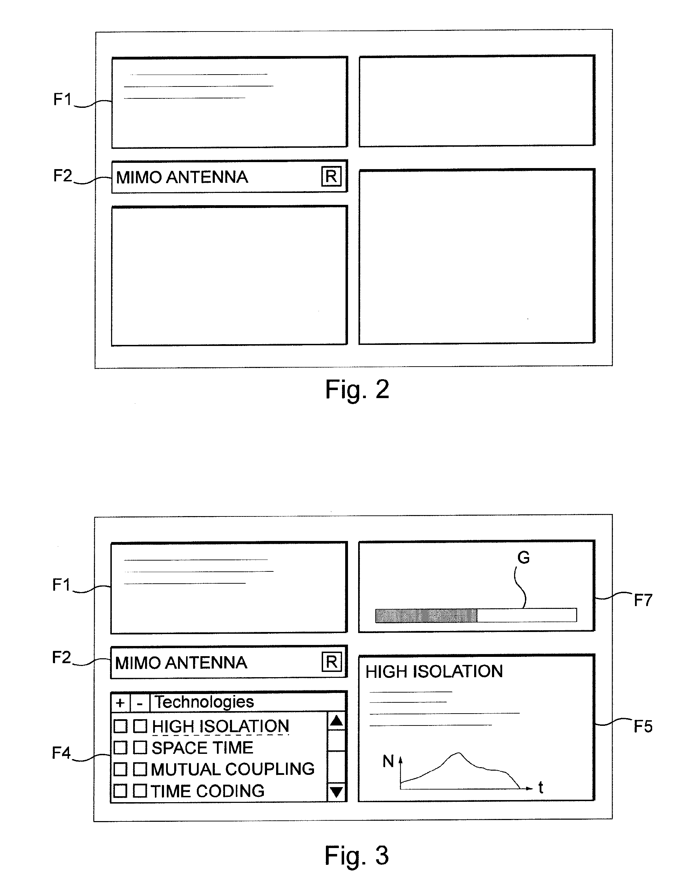

Le procédé de recherche d'experts commence par la saisie d'une formulation du problème (étape E2) par l'utilisateur dans une fenêtre F1 prévue à cet effet sur l'écran du système informatique, comme représenté en **figure 2**.

Typiquement, l'utilisateur entre, à l'aide du clavier du système informatique, un ensemble de mots (formé chacun de caractères correspondant à la frappe de l'utilisateur sur le clavier) dont l'ensemble donne une description du problème technique pour lequel on recherche un ou plusieurs experts.

Le système informatique extrait alors (étape E4) un ou plusieurs mots clés de la formulation du problème saisie par l'utilisateur, par exemple par une méthode d'identification de phrases nominales (ou "*noun phrase*" selon la terminologie anglo-saxonne) telle que décrite dans l'article *"*Surface Grammatical Analysis for the Extraction of Terminological Noun Phrases", de Didier BOURIGAULT, in ACTES DE COLING-92, NANTES, 23-28 Août 1992.

Les mots clés extraits sont affichés dans une fenêtre F2 de l'écran et définissent une requête de base utilisée dans la suite.

Selon un mode de réalisation envisageable, on peut prévoir que certains mots clés (voire tous les mots-clés) soient entrés directement par l'utilisateur (et ne proviennent donc pas dans ce cas d'une extraction d'une formulation du problème).

Le système informatique procède alors (par exemple lorsque l'utilisateur actionne un bouton interactif R) à l'étape E6 à une recherche de documents électroniques dans des bases de données locales (par exemple enregistrés sur le disque dur) et/ou distantes (auquel cas le microprocesseur y accède via un réseau tel que le réseau Internet).

On obtient alors un ensemble de documents répondant à la requête, par exemple les documents contenant tous les mots-clés de la requête dans le corps du texte, dont on mémorise les identifiants (étape E8) afin de les utiliser pour déterminer notamment de nouveaux mots-clés applicables, comme expliqué dans la suite.

Le microprocesseur peut ainsi effectuer des calculs statistiques en consultant les documents électroniques de cet ensemble. Par exemple, on peut ainsi déterminer, pour chaque document, un vecteur dont chaque ligne contient un indicateur de la pertinence du document pour un mot donné parmi tous les mots rencontrés dans l'ensemble de documents.

On utilise par exemple comme indicateur la mesure de fréquence dénommée TFIDF, c'est-à-dire la fréquence relative du mot (ou terme) concerné dans le document (rapport entre le nombre d'occurrences du mot concerné et le nombre de mots dans le document), pondérée (en pratique multipliée) par une mesure de la rareté du terme (par exemple la mesure IDF : logarithme du rapport entre le nombre de documents dans l'ensemble et le nombre de documents comprenant le mot concerné).

On détermine ensuite à l'étape E10 l'ensemble des experts associés aux documents électroniques identifiés par la recherche de l'étape E6, à savoir l'ensemble des personnes ayant un lien avec l'un des documents électroniques identifiés, que ce soit par exemple en tant qu'auteur (ou co-auteur) d'un document électronique ou personne cité dans le document électronique (voir en tant qu'auteur d'un document citant le document électronique concerné).

On détermine alors à l'étape E12 une valeur d'une mesure d'expertise associée à chaque expert identifié à l'étape E10, c'est-à-dire un niveau d'expertise associé à l'expert concerné. Cette mesure d'expertise vise à quantifier l'expertise de la personne concernée pour résoudre le problème technique défini par les mots-clés de la requête déterminée à l'étape E4.

On utilise par exemple une mesure de similarité entre l'ensemble des documents associés à l'expert concerné et les mots-clés de la requête courante.

On peut utiliser pour ce faire un modèle dit "*Rocchio*"*,* décrit dans l'article "*Ranking users for intelligent message addressing*"*,* de V. R. Carvalho et W. W Cohen, in Proceedings of the IR Research, 30th European Conférence on Advances in Information Retrieval, ECIR'08, page 321-333, Berlin, Eidelberg, 2008, Springer-Verlag.

Selon ce modèle, on utilise un vecteur associé à chaque expert obtenu en sommant, sur l'ensemble des documents associés à l'expert, les vecteurs calculés plus haut pour ces documents. On rappelle que chaque document est ici représenté comme un vecteur, dont chaque coefficient, associé à un mot, est égal à la valeur TDIDF du mot dans l'ensemble des documents.

La valeur de la mesure d'expertise (niveau d'expertise) attribuée à l'expert est déterminée par une mesure de proximité entre le vecteur composé des mots-clés de la requête et le vecteur représentant l'expert, par exemple en en pratique en calculant la similarité cosinus de ces deux représentations, soit la valeur du cosinus de l'angle entre les deux vecteurs. On rappelle que ce cosinus est égal au produit scalaire des deux vecteurs, divisé par le produit de leurs normes quadratiques.

Le calcul des niveaux d'expertise relatifs à chaque expert de la liste déterminée à l'étape E10 est ainsi effectué par le microprocesseur sur la base des vecteurs calculés comme indiqué plus haut après consultation des documents électroniques par le microprocesseur.

Selon une possibilité envisageable, non prévue sur les figures jointes, la liste des experts, classés par exemple par ordre décroissant de niveau d'expertise associé, est affichée dans une fenêtre supplémentaire de l'écran. En pratique, on affiche par exemple les dix premiers experts (classés par niveau d'expertise décroissant), les autres experts pouvant être affichés sur la commande de l'utilisateur, par exemple par action au moyen de la souris sur un ascenseur interactif affiché en bordure de la fenêtre. On prévoit également de pouvoir exporter la liste des experts pour un traitment ultérieur, au format texte ou dans un format compatible de logiciel tableurs comme Microsoft Excel^{®} (.csv, .xls).

On peut prévoir par exemple que, pour chaque expert, on affiche en plus de son nom (incluant éventuellement le prénom), son adresse électronique et le niveau d'expertise déterminé précédemment, également dénommée "*score*" ainsi que des informations relatives au document le plus pertinent ayant entrainé la sélection de l'expert, ces information pouvant comprendre le titre, la date et un lien hypertexte vers la publication ou l'éditeur.

Selon un mode de réalisation envisageable, il est prévu de combiner pour chaque expert identifié à l'étape E10, le niveau d'expertise déterminé ci-dessus à un niveau de confiance déterminé en fonction des liens existant entre des informations électroniques associés à l'expert et d'autres informations électroniques.

Le niveau de confiance d'un expert donné est par exemple déterminé en fonction d'une mesure de sa connectivité au sein d'un graphe dont les noeuds sont formés par l'expert concerné, les co-auteurs de l'expert concerné, les auteurs cités dans les documents associés à l'expert concerné, les auteurs citant l'expert concerné, les personnes connectées à l'expert dans un réseau social électronique et les membres d'une organisation à laquelle participe l'expert (laboratoire ou société). La contribution de chaque lien dans la mesure de connectivité peut être pondérée par le type de lien concerné.

La mesure de la connectivité peut être pondérée (voire limitée) à des noeuds pertinents par rapport à la requête courante. Pour ce faire, on pondère par exemple chaque noeud en fonction du niveau d'expertise de la personne désignée par le noeud concerné, qui peut être calculée comme indiqué précédemment au moyen de la similarité cosinus entre le vecteur associé aux mots-clés de la requête et les vecteurs représentant les documents électroniques associés à la personne désignée par le noeud concerné.

La mesure de confiance peut ainsi être fonction de la pertinence des noeuds par rapport à la requête courante.

Une fois le graphe construit par le microprocesseur par détermination des noeuds connectés à celui désignant l'expert concerné, le niveau de confiance est déterminé (étape E14) par l'utilisation, au sein de ce graphe, d'une mesure telle que PageRank (voir l'article "The pagerank citation ranking: bringing order to the Web. Technical report 1999-66" de L. Page, S. Brin, R. Motwani et T. Winograd, Stanford Infolab, Novembre 1999) ou une mesure du caractère central du noeud correspondant à l'expert dans le graphe, tel que décrit par exemple dans l'article "A faster algorithm for betweenness centrality", U. Brandes, 2001.

Dans le cas où une telle mesure de confiance est utilisée, on procède à une étape E16 de combinaison pour chaque expert, de la mesure d'expertise associée à l'expert et de la mesure de confiance associée à cet expert.

Cette combinaison peut être réalisée par exemple en sommant, pour chaque expert, le niveau de confiance de cet expert et le niveau d'expertise de cet expert, avec une pondération éventuelle. En variante, on peut classer les experts d'une part en fonction de leur niveau d'expertise, et d'autre part en fonction de leur niveau de confiance, et combiner les deux rangs de classement par une méthode connue pour ce faire comme la combinaison de l'inverse de rang, soit : la valeur égale à deux fois l'inverse de la somme des inverses des rangs.

Toujours dans le cas où une mesure de confiance des experts est utilisée, on peut alors afficher la liste des experts dans la fenêtre supplémentaire éventuellement utilisée dans ce but comme indiqué *supra,* par exemple par ordre décroissant de leur score obtenu par cette combinaison (et non en utilisant seulement leur niveau d'expertise comme décrit plus haut dans le cas où la mesure de confiance n'est pas utilisée).

Sur la base du niveau d'expertise déterminé pour chacun des experts à l'étape E12 (éventuellement combiné à l'étape E16 au niveau de confiance obtenu à l'étape E14), on procède à une étape E17 de sélection automatique des experts dont le niveau d'expertise (ou le niveau combiné d'expertise et de confiance) répond à un critère prédéterminé et d'affichage d'une indication correspondante. Cette étape E17 est décrite plus en détail dans la suite.

On procède également lors d'une étape E18 à la recherche de concepts associés aux mots-clés de la requête courante dans l'ensemble des documents de l'étape E8 afin d'identifier en particulier des concepts, ici des technologies, associés à ces mots-clés. On s'intéressera également aux experts dans ces technologies comme expliqué dans la suite.

Pour identifier ces concepts associés aux mots-clés de la requête courante, le microprocesseur calcule par exemple, pour chacune des expressions ou phrases nominales rencontrées dans les documents de l'ensemble de documents, une mesure de la co-occurrence de l'expression concernée et des termes de la requête courante, par exemple au moyen de la méthode proposée dans "Improving automatic query expansion", de Mandar Mitral, in Proceeding SIGIR '98 Proceedings of the 21st annual international ACM SIGIR conference on Research and development in information retrieval ACM New York, NY, USA 1998..

On se limite par exemple en pratique à un nombre prédéfini de concepts (déterminés comme indiqué ci-dessus sous forme d'expressions) ayant obtenus les plus fortes valeurs de la mesure de co-occurrence avec les mots-clés de la requête.

On obtient ainsi un ensemble de concepts (ici des technologies), définis éventuellement chacun par une pluralité de mots, et qui sont considérés proches des mots-clés de la requête courante selon la mesure qui vient d'être mentionnée (étape E20).

Le microprocesseur commande alors l'affichage d'une liste d'une partie au moins de ces concepts dans une fenêtre F4 de l'écran. Pour chaque concept identifié, on affiche par exemple les mots définissant le concept. On affiche par ailleurs, comme visible en **figure 3**, un moyen de sélection des concepts comme par exemple un bouton interactif de sélection devant chaque concept (colonne marquée "+" sur la figure), ainsi qu'éventuellement un autre bouton interactif de rejet (colonne marquée "-" sur la figure).

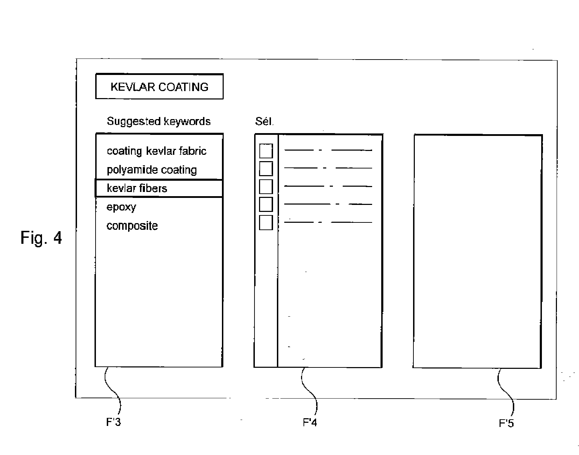

Selon une variante envisageable, représentée en figure 4, le microprocesseur commande l'affichage d'une liste d'une partie au moins de ces concepts dans une fenêtre F'3 de l'écran et donne la possibilité à l'utilisateur de sélectionner interactivement l'un des concepts affichés. La sélection d'un concept entraîne l'affichage dans une fenêtre F'4 d'une liste de documents pertinents pour le concept sélectionné, déterminés par analyse automatique de texte (par exemple par filtrage à l'aide des mots clés du concept sélectionné) conduite ici au sein de l'ensemble de documents électroniques obtenus à l'étape E6. Ces documents pertinents sont par exemple présentés selon leur ordre de pertinence (en rapport avec les mots clés du concept sélectionné). Le microprocesseur commande alors également, l'affichage, dans la fenêtre F'4, d'un moyen de sélection de chacun des documents listés, comme par exemple un bouton interactif de sélection devant chaque document listé.

Pour chaque technologie (dans le cas de la figure 3) ou chaque document (dans le cas de la figure 4), l'utilisateur a la possibilité de la présélectionner pour évaluer sa pertinence. Cette présélection peut se faire par exemple par un simple clic de souris sur la représentation à l'écran (c'est-à-dire les mots de l'expression concernée, déterminée à l'étape E18, affichés dans la fenêtre F4 dans le cas de la figure 3 ou le titre du document affiché dans la fenêtre F'4 dans le cas de la figure 4). Lorsqu'une technologie est présélectionnée dans le cas de la figure 3, des informations supplémentaires sont affichées dans une fenêtre F5. Ces informations comprennent par exemple au moins un extrait d'un des documents les plus pertinents pour cette technologie, une représentation textuelle ou graphique de la fréquence du concept en fonction des dates des documents électroniques ou des nationalités des auteurs.

Lorsqu'un document est présélectionné dans le cas de la figure 4, des informations supplémentaires sont affichées dans une fenêtre F'5. Ces informations comprennent le titre, la date, un résumé, les noms des auteurs du document concerné.

Pour chaque technologie ou, dans la variante pour chaque document, l'utilisateur a également la possibilité d'indiquer, de manière interactive, à l'étape E22 s'il sélectionne (définitivement), en actionnant le bouton interactif de sélection, le concept concerné (ici la technologie concernée), selon le mode de réalisation de la figure 3, ou, dans la variante de la figure 4, le document concerné, ou s'il le rejette au contraire en actionnant le bouton interactif de rejet (prévu ici seulement dans le cas de la figure 3, sans que cela ne soit bien sûr limitatif).

Lorsque l'utilisateur a sélectionné un concept (ou un document dans la variante de la figure 4) dans la fenêtre F4, le microprocesseur effectue à nouveau les étapes E6, E10, E12 et E17 (et éventuellement E14 et E16) ainsi que les étapes E8, E18, E20 mais en ajoutant (étape E24) à la requête précédemment utilisée (requête de base) les mots-clés définissant le concept que l'utilisateur a sélectionné de manière interactive dans le cas de la figure 3, ou les mots-clés définissant le ou les concept(s) détecté(s) à l'étape E18 dans le document sélectionné dans le cas de la figure 4.

Le vecteur représentatif de la requête ainsi complétée contient donc des coefficients positifs au niveau de ses lignes associées non seulement aux mots clés de la requête de base mais aussi au niveau de ses lignes associés aux mots définissant le ou les concept(s) sélectionné(s) (de manière définitive) par l'utilisateur.

Lorsque l'utilisateur actionne un bouton de rejet associé à une technologie donnée, la nouvelle mise en oeuvre des différentes étapes indiquées ci-dessus est également réalisée, cette fois en tenant compte du fait que l'utilisateur n'est pas intéressé par les concepts rejetés. On peut prévoir pour ce faire que le vecteur représentatif de la requête modifiée contienne des coefficients négatifs au niveau de ses lignes associées aux mots définissant le concept rejeté par l'utilisateur.

De nouveaux documents électroniques sont donc récupérés et de nouveaux experts identifiés ; le niveau d'expertise de chaque expert est ainsi mis à jour pour représenter la proximité des termes rencontrés dans les documents associés à l'expert (vecteur associé à l'expert comme décrit précédemment) et des termes de la requête complétée (vecteur représentant les termes de cette requête, avec des coefficients négatifs pour les termes rejetés), c'est-à-dire de la requête de base complétée par les mots clés correspondant à la technologie (ou concept) sélectionnée (ou rejetée) de manière interactive par l'utilisateur.

Lorsqu'elle est affichée, la liste des experts est mise à jour (du fait du changement éventuel du niveau d'expertise pour chaque expert et du changement de l'ordre de classement des experts par rapport à ce niveau d'expertise qui en découle).

Le système dans une étape E17, réalisée notamment à chaque changement de l'ensemble des experts et de leur niveau d'expertise, détermine le nombre d'experts remplissant un critère de sélection prédéfini C1. Ce critère est par exemple une valeur minimum du niveau d'expertise estimé de l'expert.

Les experts remplissant cette condition sont automatiquement sélectionnés et sauvegardés dans une liste L. A chaque ajout de mots clés par l'utilisateur dans la fenêtre F2 ou de sélection interactive de concepts dans la fenêtre F4 (ou de documents dans la fenêtre F'4 dans la variante de la figure 4), cette liste L est complétée des nouveaux experts trouvés (du fait de la nouvelle itération de l'ensemble des étapes, et notamment l'étape E17) remplissant le critère de sélection C1.

Une première indication visuelle affichée dans une fenêtre F7, par exemple une représentation visuelle, textuelle ou graphique G du nombre des experts sélectionnés ou de l'expertise cumulée des experts sélectionnés, est fournie à l'utilisateur. On propose par exemple que le niveau d'expertise utilisé à cet effet soit le niveau d'expertise de l'expert tel que déterminé au moment de la sélection (automatique) de l'expert, quelle que soit l'évolution éventuelle de niveau d'expertise de cette personne suite à des changements de sélection de technologies ou de mots-clés postérieurement à la sélection de l'expert vers la liste L.

Cette représentation graphique G représente par exemple le ratio entre le nombre d'experts sélectionnés et un nombre d'experts prédéterminé (éventuellement égal au seuil fixé pour atteindre le critère C2 mentionné ci-après).

Lorsque cette liste d'experts L remplit les conditions d'un critère C2, une deuxième indication visuelle est fournie à l'utilisateur (c'est-à-dire affichée dans la fenêtre F7) pour lui indiquer que l'ensemble des experts trouvés est suffisant pour pouvoir lancer une consultations de ces derniers avec une probabilité importante de voir le problème résolu. Le critère C2 est par exemple un nombre minimum d'experts sélectionnés ; alternativement on pourra utiliser une valeur minimum pour la somme de l'expertise des experts sélectionnés.

Le procédé qui vient d'être décrit permet ainsi à l'utilisateur d'explorer des domaines techniques connexes, par exemple en sélectionnant les concepts (ou documents) qui lui sont suggérés et qui l'intéressent dans la fenêtre F4 (ou F'4), et ainsi d'avoir recours à de nouveaux experts dans ses nouveaux domaines d'intérêt.

On peut prévoir par ailleurs que l'atteinte du critère C2 qui vient d'être défini conduise, de manière automatique ou après confirmation de l'utilisateur, à mettre un terme à la phase de recherche.

Le système informatique peut alors par exemple proposer à l'utilisateur l'envoi d'un message (par exemple un courrier rédigé par l'utilisateur) à l'ensemble des experts sélectionnés (listés dans la liste L) par messagerie électronique.

Les modes de réalisation qui précèdent ne sont que des exemples possibles de mise en oeuvre de l'invention, qui ne s'y limite.

## Revendications

1. Système d'identification d'au moins un expert compétent pour résoudre un problème technique défini par une requête de base, **caractérisé en ce qu'**il comprend :
- un écran ;
- un moyen de saisie ;
- des moyens de détermination d'une pluralité de concepts associés à la requête de base par analyse automatique de texte conduite au sein d'un ensemble de documents électroniques mémorisés dans au moins une base de données ;
- des moyens pour commander, pour chaque concept de la pluralité, l'affichage sur l'écran d'une désignation du concept concerné avec possibilité pour un utilisateur de sélectionner de manière interactive, grâce au moyen de saisie, une information liée au concept concerné ;
- des moyens d'identification d'au moins un expert associé à des documents électroniques répondant, au sens d'une mesure obtenue par analyse automatique de texte, à la requête de base complétée par au moins un concept associé à l'information sélectionnée.

2. Système d'identification d'experts selon la revendication 1, dans lequel l'information liée au concept concerné est le concept concerné et dans lequel le concept associé à l'information sélectionnée est l'information sélectionnée.

3. Système d'identification d'experts selon la revendication 1, dans lequel l'information liée au concept concerné est un document pertinent pour le concept concerné et dans lequel le concept associé à l'information sélectionnée est un concept présent dans le document sélectionné.

4. Système d'identification d'experts selon la revendication 3, comprenant des moyens de sélection interactive d'un concept de la pluralité et des moyens de détermination de documents liés au concept sélectionné par analyse automatique de texte conduite au sein d'une partie au moins de l'ensemble de documents électroniques, ledit document pertinent étant l'un desdits documents liés au concept sélectionné.

5. Système d'identification d'experts selon l'une des revendications 1 à 4, comprenant :
- des moyens de détermination, pour chaque expert parmi une pluralité d'experts, d'un niveau d'expertise par analyse automatique de texte au sein d'un corpus de documents électroniques comprenant des documents associés à l'expert ;
- des moyens de détermination, pour chaque expert de ladite pluralité, d'un niveau de confiance au moyen d'une mesure des liens existant entre des informations électroniques associées à l'expert et d'autres informations électroniques ;
- des moyens de sélection de certains experts parmi ladite pluralité sur la base des niveaux d'expertise déterminés et des niveaux de confiance déterminés.

6. Procédé d'identification d'au moins un expert compétent pour résoudre un problème technique défini par une requête de base, **caractérisé en ce qu'**il comprend les étapes suivantes :
- détermination (E18) d'une pluralité de concepts associés à la requête de base par analyse automatique de texte conduite au sein d'un ensemble de documents électroniques ;
- pour chaque concept de la pluralité, commande de l'affichage d'une désignation du concept concerné avec possibilité pour un utilisateur de sélectionner de manière interactive une information liée au concept concerné (E22) ;
- identification (E24, E6, E10, E12) d'au moins un expert associé à des documents électroniques répondant, au sens d'une mesure obtenue par analyse automatique de texte, à la requête de base complétée par au moins un concept associé à l'information sélectionnée.

7. Procédé selon la revendication 6, dans lequel l'information liée au concept concerné est le concept concerné et dans lequel le concept associé à l'information sélectionnée est l'information sélectionnée.

8. Procédé selon la revendication 6, dans lequel l'information liée au concept concerné est un document pertinent pour le concept concerné et dans lequel le concept associé à l'information sélectionnée est un concept présent dans le document sélectionné.

9. Procédé selon la revendication 8, comprenant les étapes suivantes :
- sélection interactive d'un concept de la pluralité ;
- détermination de documents liés au concept sélectionné par analyse automatique de texte conduite au sein d'une partie au moins de l'ensemble de documents électroniques, ledit document pertinent étant l'un desdits documents liés au concept sélectionné.

10. Procédé selon l'une des revendications 6 à 9, comprenant une étape de détermination (E12) d'un niveau d'expertise associé à l'expert identifié au moyen d'une mesure de similarité entre les termes de la requête complétée et des termes extraits des documents associés à l'expert concerné.

11. Procédé selon l'une des revendications 6 à 10, dans lequel une pluralité d'experts est identifiée à l'étape d'identification avec, pour chaque expert identifié, un niveau d'expertise associé, le procédé comprenant une étape d'affichage (E17) d'une indication déterminée en fonction des niveaux d'expertise des experts identifiés.

12. Procédé selon l'une des revendications 6 à 11, dans lequel la requête de base est définie par au moins un mot-clé saisi par l'utilisateur.

13. Procédé selon l'une des revendications 6 à 12, **caractérisé par** la réitération des étapes de détermination d'une pluralité de concepts et d'affichage d'une désignation des concepts déterminés sur la base de la requête complétée.

14. Procédé selon l'une des revendications 6 à 13, dans lequel l'ensemble de documents électroniques est déterminé par recherche (E6) au sein d'au moins une base de données documentaire sur la base d'au moins un mot-clé de la requête de base.

15. Plate-forme d'intermédiation destinée à l'innovation ouverte, **caractérisée en ce qu'**elle comprend :
- des moyens de réception d'une définition d'un problème technique ;
- des moyens d'identification d'au moins un expert compétent pour résoudre ce problème technique selon un procédé conforme à l'une des revendications 6 à 14 ;
- des moyens d'émission d'un message électronique audit au moins un expert identifié.
